# EUROPEAN PATENT SPECIFICATION

(11) **EP 2 416 924 B1**
(45) Date of publication and mention of the grant of the patent: **21.11.2012**
(21) Application number: 10730039.4
(22) Date of filing: 06.04.2010
(51) Int. Cl.: B23Q 7/02, B23Q 7/04, B23Q 7/10

(54) **AUTOMATIC HANDLING DEVICE**
AUTOMATISCHE HANDHABUNGSVORRICHTUNG
DISPOSITIF DE MANUTENTION AUTOMATIQUE

(30) Priority: 07.04.2009 CZ 20090214
(43) Date of publication of application: 15.02.2012
(73) Proprietor: Protechnik S.R.O., 569 32 Staré Mesto 247 (CZ)
(72) Inventor: TANNO, Daniel, 7002 Chur (CH)
(74) Representative: Soukup, Petr
(86) International application number: PCT/CZ2010/000039
(87) International publication number: WO 2010/115383

(56) References cited:
- EP-A1- 0 266 647
- DE-A1- 2 444 124
- GB-A- 2 301 338
- US-A- 4 669 047

## Description

### Technology area

The invention involves construction of an automatic handling device designed for handling items from one place to another, especially for stowing and changing of workpieces at numerically controlled machines and centres, in stores, on assembly lines, in paint shops, etc.

### Existing state of technology

At present, there are many specific automatic systems for item handling; their construction and design are especially based on the place they may be utilised in and type of products that are carried. In most cases they include systems with industrial robots or linear drive-based exchange mechanisms in a horizontal or vertical plane. The disadvantage of using the industrial robots is their high purchase price, difficult programming, relatively low carrying capacity and considerable cover area demands when protective fencing of the workplace needs to be provided or the robot placed in a special booth to ensure safety. And the disadvantage of using the linear drive-based exchange mechanisms is their demanding and complicated deformation compensation when the arm is extended and under higher load. Stiffness increase then leads to higher acquisition costs, more robust constructions and therefore higher cover area demands. The common disadvantage of all known systems includes their fixation directly to the machine or floor before or on the side of the machine, which limits the access of the operating staff and basically prevents utilisation of that space by other facilities. Magazines of these handling devices usually include tables, racks, drawers, bands, palettes or tracks from which workpieces are taken or removed by various types of turning or linearly sliding manipulators that are firmly anchored to the floor or common foundation.

Designs specified in CZ 271786, CZ 278074, CZ 258611, CZ 1992-3889 A1, EP 1481758, EP 1388391, EP 1775072, EP 1293307, US 2002025757 A1, DE 19641534 or EP 620078 documents can be mentioned as examples of the devices described above.

The task of the submitted invention is to present a new mobile automatic handling device of a relatively simple modular construction that would enable multipurpose utilisation for item handling at various machines, production lines and in stores with front and side feeding. Enabling a trouble-free access to the machine's working space, achieving manipulator's mobility in three axes while ensuring high stiffness and carrying capacity of the construction and meeting the relatively small cover area demand is another challenge of the submitted solution.

### Principle of the invention

The goal specified above is fulfilled by an invention involving an automatic handling device designed for handling items from one place to another, especially for stowing and changing of workpieces and including a magazine, manipulator and control unit that is connected to both the control block of the operated device and functional units of the magazine and manipulator. The principle of the invention includes the fact that the device consists of a supporting base fitted with cladding with a magazine and manipulator being fixed to the base surface and connected with the control unit placed outside the cladding; the magazine consists of a rotation-embedded supporting pole on which there is one or more storage areas situated horizontally above each other; the manipulator consists of a height unit, rotation unit and swinging unit that are mutually coupled; there is an adapter fitted with technical means for clamping and transfer of items connected to the end part of the swinging unit.

The advantage option includes a base that is fitted with travel means, fixing position elements and handle, with the supporting pole being provided with the first drive, connected with the control unit and cladding being fitted with an entrance door, at least one stowing window and eventually an inspection hole.

Finally, it is useful when the manipulator consists of a height unit comprising a pole line connected to the base with a height-adjustable sliding unit outside or inside it; this unit is fitted with the second drive and there is a rotation unit fixed by rotating at its open end; the rotation unit is fitted with the third drive and comprises a horizontally situated arm with the swinging unit in form of a parallelogram being fixed to its open end; the swinging unit is fitted with the fourth drive where there is an adapter mounted to the end part of the swinging unit. All drives are connected to the control unit.

The submitted invention brings a new and higher effect seen in its mobility, characterised by its simple design and universal usability for handling various items, e.g. at machines with both front and side stowing of workpieces. As far as the conception is concerned, the device enables programming that is the same or as much similar as at CNC machine; the manipulator system enables to use more programmable zero points and access to both more levels of the magazine's storage areas and inner spaces of individual storage areas. The end adapter of the parallelogram can be adjusted for connection of technological components with various connection methods, whether mechanical, electromagnetic, pneumatic or hydraulic.

### Description of pictures on the attached drawings

A specific example of the invention design is schematically shown on the attached drawings where
pic. 1 is an overall axonometric view of the automatic handling device and
pic. 2 is an axonometric view of the device from pic. 1 with the cladding being removed and schematically shown connection of the control unit. Invention design examples

The automatic handling device consists of a supporting base 1 with a magazine 2 and manipulator 3 being fixed in its opposite outer parts. The base 1 is formed in a rectangle-shaped advantage and in its bottom part it is fitted with travel means 11, e.g. in form of wheels or rollers. The base 1 is further fitted with position fixation elements 12, with an advantage in form of height-adjustable pillars placed at travel means 12 and control handle 13 fixed to one of the lateral faces of the base 1. The base 1 is fitted with cladding 14 with an entrance door 141, at least one stowing window 142 to enable connecting the cladding's inner space 14 with a not shown working space of the machine. On the side adjacent to the control handle 13, there is an inspection hole 143 to enable the operating staff to orientate themselves when fitting the machine in the working position.

The magazine 2 consists of a rotation-embedded supporting pole 21 with one or more storage areas 22 situated horizontally above each other being fixed on that pole. The rotation of the storage areas is provided by the first drive 23 that is connected with the control unit 4 comprised of e.g. a computer with an interactive display.

The manipulator 3 consists of a height unit 31 comprising a pole line 311 connected to the base 1 using a fixing board 312. In the manipulator's inner cavity there is a height-adjustable sliding unit 313 fitted with the second drive 314 enabling its continuous height adjusting and connection with the control unit 4 that is further connected with the control block 5 of a machine that is not shown. At the open end, e.g. a shaft, of the sliding unit there is a rotation-fixed rotation unit 32 fitted with the third drive 321, connected with the control unit 4. The rotation unit 32 consists of a horizontally situated arm 322 with a parallelogram-formed swinging unit 33 being fixed to its open end. The movement of the swinging unit 33 is provided by the fourth drive 331, embedded inside the arm 322 and connected with the control unit 4. An adapter 34 fitted with common, not shown, technical means ensuring clamping and transfer of items from one place to another is fixed to the end part of the swinging unit 33. Whether it concerns mechanical, pneumatic, electromagnetic or hydraulic means is not important for the solution principle.

If workpieces are required to be stowed in the machine, they are magazined up in the preset order to the storage areas 22 of the magazine 2 and the entire handling device is put to the machine's working space and the working position of the handling device is secured by fixation elements 12. Subsequently, the control unit 4 is connected with the control block 5; entry to the inner space of the cladding 14 is blocked and the operating staff initiate the working process. With its adapter 34, the manipulator 3 automatically takes workpieces from the storage areas 22 of the magazine 2 in the preset order and handles them, e.g. puts them to the machines's working space and stores them back after machining. All the activity of the handling device is fully automated with no intervention by the operating staff being necessary during the programmed production cycle.

### Industrial utility

The automatic handling device has been designed for handling items from one place to another in various branches of industry, e.g. to provide exchange of workpieces at processing machines and centres for storing and removing of products from storage areas of magazines or racks, when putting items from pallets to assembly lines, etc.

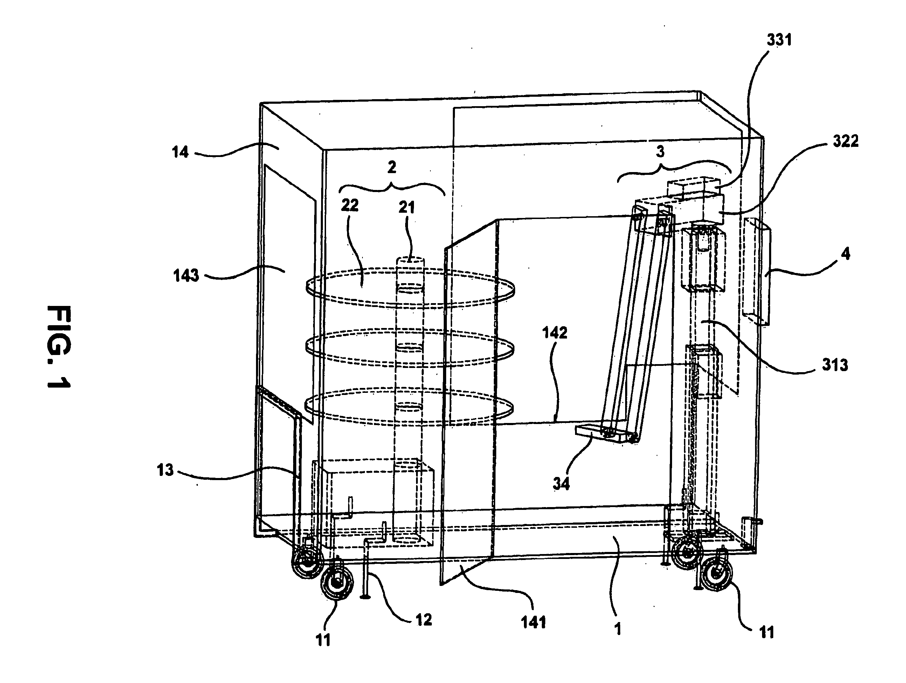

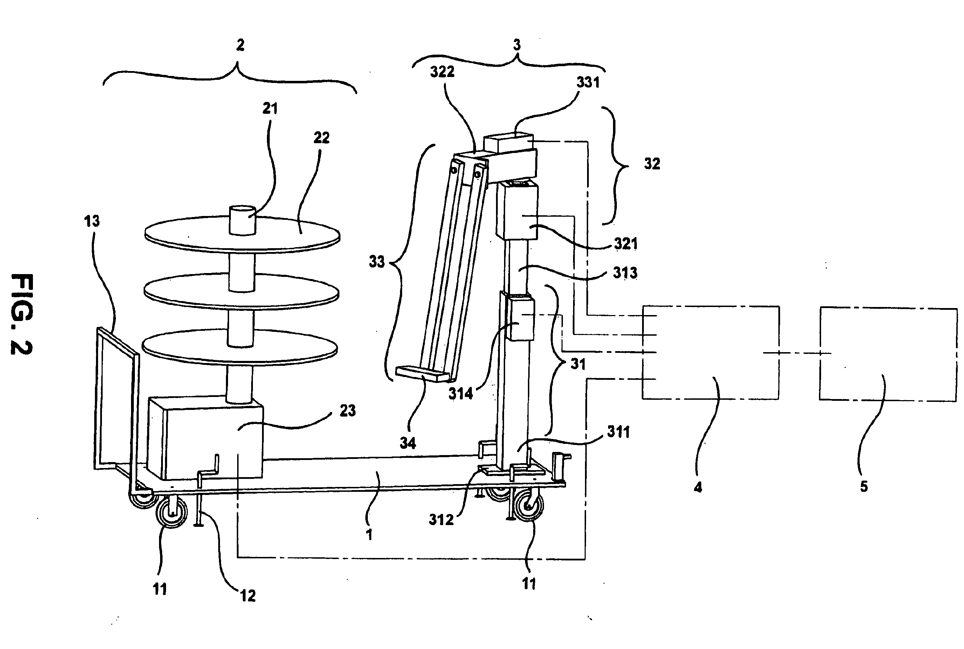

## Claims

1. The automatic handling device designed for handling items from one place to another, especially for stowing and changing of workpieces at machines, including a magazine (2), manipulator (3) and control unit (4), connected both with the control block (5) of the operated device and functional units of the magazine (2) and manipulator (3), is **characterised by** the fact that it consists of a supporting base (1) fitted with cladding (14) with a magazine (2) and manipulator (3) being fixed on the base surface; the magazine (2) and manipulator (3) are connected with the control unit (4) placed outside the cladding (14) with the magazine (2) consisting of a rotation-embedded supporting pole (21) on which one or more storage areas (22) situated horizontally above each other are fixed and the manipulator (3) consisting of a height unit (31), rotation unit (32) and swinging unit (33) that are mutually coupled; there is an adapter (34) fitted with technical means for clamping and transfer of items connected to the end part of the swinging unit.

2. An automatic handling device as per claim 1, **characterised by** the fact the base is fitted with travel means (11), position fixation elements (12) and handle (13).

3. An automatic handling device as per claim 1 or 2, **characterised by** the fact that the supporting pole (21) is fitted with the first drive (23) connected with the control unit (4).

4. An automatic handling device as per any claim 1 to 3, **characterised by** the fact that the cladding (14) is fitted with an entrance door (141), at least one stowing window (142) and eventually an inspection hole.

5. An automatic handling device as per any claim 1 to 4, **characterised by** the fact that the manipulator (3) consists of a height unit (31) comprising a pole line (311) connected to the base (1) with a height-adjustable sliding unit (313) outside or inside it; this unit (313) is fitted with the second drive (314) and there is a rotation unit (32) at its open end embedded by rotating; the rotation unit (32) is fitted with the third drive (321) and comprises a horizontal situated arm (322) with the swinging unit (33) in form of parallelogram being fixed to its open end; the swinging unit (33) is fitted with the fourth drive (331) where there is an adapter (34) mounted to the end part of the swinging unit (33). All drives (314), (321) and (331) are connected to the control unit (4).

## Patentansprüche

1. Die automatische Handhabungsanlage, die für die Handhabung von Gegenständen von einer Stelle zu einer anderen Stelle bestimmt ist, vor allem für die Bestückung und den Tausch von Werkstücken bei Maschinen, und aus einem Magazin (2), einem Manipulator (3) und einer Bedien- und Steuereinheit (4) bestehen, die sowohl mit dem Steuerblock (5) der bedienten Anlage als auch mit den Funktionseinheiten des Magazins (2) und des Manipulators (3) verbunden ist, zeichnet sich dadurch aus, dass sie aus einem tragenden Grundgestell (1) besteht, das mit einem Gehäuse (14) versehen ist, wobei auf der Fläche des Grundgestells das Magazin (2) und der Manipulator (3) angeordnet sind, die mit der außerhalb des Mantels (14) angeordneten Bedien- und Steuereinheit (4) verbunden sind, wobei das Magazin (2) aus einer drehbar gelagerten Trägersäule (21) besteht, an der eine oder mehrere horizontal übereinander liegende Lagerflächen (22) angeordnet sind, und der Manipulator (3) besteht aus der miteinander gekoppelten Vertikaleinheit (31), Dreheinheit (32) und Schwenkeinheit (33), an deren Endstück ein Adapter (34) angeordnet ist, der mit technischen Mitteln zum Greifen und Bewegen von Gegenständen ausgestattet ist.

2. Die automatische Handhabungsanlage nach dem Anspruch 1, zeichnet sich dadurch aus, dass das Grundgestell mit einem Fahrwerk (11), Feststellelementen zu Positionssicherung (12) und einem Schiebebügel (13) versehen ist.

3. Die automatische Handhabungsanlage nach den Ansprüchen 1 oder 2, zeichnet sich dadurch aus, dass die Trägersäule (21) mit einem Antrieb (23) ausgestattet ist, der mit der Bedien- und Steuereinheit verbunden ist (4).

4. Die automatische Handhabungsanlage nach einem der Ansprüche 1 bis 3, zeichnet sich dadurch aus, dass das Gehäuse (14) mit einer Tür (141), mindestens einem Beladefenster (142) und gegebenenfalls einem Sichtfenster (143) ausgestattet ist.

5. Die automatische Handhabungsanlage nach einem der Ansprüche 1 bis 4, zeichnet sich dadurch aus, dass der Manipulator (3) aus der Vertikaleinheit (31) besteht, die aus der am Grundgestell (1) befestigten Säulenführung (311) besteht und in deren Innenraum eine höhenverstellbare und mit einem zweiten Antrieb (314) ausgestattete Ausrückeinheit (313) angeordnet ist, und an deren losem Ende eine verdrehbare mit einem dritten Antrieb (321) versehene Dreheinheit (32) angeordnet ist, und aus einem horizontal angeordneten Arm (322) besteht, an dessen freiem Ende eine von einem vierten Antrieb (331) angetriebene Schwenkeinheit (33) in Form eines Parallelogramms befestigt ist, an deren Ende sich ein Adapter (34) befindet, wobei alle Antriebe (314), (321) und (331) mit der Bedien- und Steuereinheit (4) verbunden sind.

## Revendications

1. L'équipement de manutention automatique, conçu pour la manutention des objets d'un endroit à l'autre, en particulier pour l'insertion et le remplacement des pièces à usiner des machines contenant le réservoir (2), le manipulateur (3) et l'unité de contrôle et de commande (4) qui est interconnectée non seulement au bloc de commande (5) du dispositif actionné mais aussi aux unités fonctionnelles du réservoir (2) et du manipulateur (3) **caractérisé en ce qu'**il se compose d'une base de support (1) munie d'une chape (14) où sur le plateau de base sont fixés le réservoir (2) et le manipulateur (3) reliés à l'unité de contrôle et de commande (4) située en dehors de la chape (14), le réservoir (2) étant constitué d'une colonne porteuse (21) montée en rotation sur laquelle sont fixées une ou plusieurs zones d'entreposage horizontalement situées l'une au-dessus de l'autre (22) et le manipulateur (3) étant constitué de l'unité de hauteur (31), de l'unité rotative (32) et de l'unité de basculement (33) mutuellement couplées, sur l'extrémité de l'unité de basculement se trouve un adaptateur (34) muni de moyens techniques pour saisir et transférer des objets.

2. L'équipement de manutention automatique selon la revendication 1, **caractérisé en ce que** la base est munie des moyens de translation (11), des éléments de fixation (12) de la position et de la poignée de commande (13).

3. L'équipement de manutention automatique selon la revendication 1 ou 2, **caractérisé en ce que** la colonne porteuse (21) est munie du premier actionneur (23) qui est relié à l'unité de contrôle et de commande (4).

4. L'équipement de manutention automatique selon une des revendications 1 à 3, **caractérisé en ce que** la chape (14) est munie d'une porte d'entrée (141), d'au moins une fenêtre d'insertion (142) et éventuellement d'une visière (143).

5. L'équipement de manutention automatique selon une des revendications 1 à 4, **caractérisé en ce que** le manipulateur (3) se compose d'une unité de hauteur (31), comprenant des colonnes de guidage (311), fixées à la base (1) et, à l'extérieur ou à l'intérieur desquelles se trouve une unité insérable à hauteur réglable (313) qui est munie d'un deuxième actionneur (314) et à l'extrémité libre de laquelle est montée en rotation une unité rotative (32) munie d'un troisième actionneur (321) et constituée d'un bras horizontal (322), à l'extrémité libre duquel est montée une unité de basculement (33) ayant la forme d'un parallélogramme qui est pourvu d'un quatrième actionneur (331) où à la fin de l'unité de basculement (33) est monté un adaptateur (34), tous les actionneurs (314), (321) et (331) étant reliés à l'unité de contrôle et de commande (4).
